# EUROPÄISCHE PATENTSCHRIFT

(11) **EP 2 226 544 B1**
(45) Veröffentlichungstag und Bekanntmachung des Hinweises auf die Patenterteilung: **13.06.2012**
(21) Anmeldenummer: 09003347.3
(22) Anmeldetag: 07.03.2009
(51) Int. Cl.: F16L 23/18, F16L 23/24, F16J 15/10, F16J 15/12

(54) **Kammprofildichtring**
Sealing ring with serrated profile
Bague d'étanchéité de profilé strié

(43) Veröffentlichungstag der Anmeldung: 08.09.2010
(73) Patentinhaber: Kempchen Dichtungstechnik GmbH, 46147 Oberhausen (DE)
(72) Erfinder: Thomsen, Peter, 27243 Harpstedt (DE)
(74) Vertreter: Albrecht, Rainer Harald

(56) Entgegenhaltungen:
- DE-B1- 2 756 351
- DE-U1- 9 304 123
- DE-U1- 29 812 927
- US-A1- 2004 118 510
- US-B1- 6 845 983

## Beschreibung

Die Erfindung betrifft einen Kammprofildichtring gemäß dem Oberbegriff des Anspruchs 1.

Üblicherweise ist an beiden Seiten des Grundkörpers eine Dichtauflage vorgesehen, wobei der Kammprofildichtring in Bezug auf eine zu den Dichtflächen parallele Mittelebene symmetrisch mit gegenüberliegenden Kammspitzen und Kammtälern ausgebildet ist.

Ein Kammprofildichtring mit einem metallischen Grundkörper ist aus der DE 699 16 518 T2 bekannt. Der dort beschriebene Kammprofildichtring weist an seinen beiden Seiten Dichtauflagen auf. Die Dichtauflagen decken jeweils ein Kammprofil ab, dessen Kämme sich über die gesamte zugeordnete Dichtauflage erstrecken. Als Kamm wird dabei im Rahmen der vorliegenden Erfindung eine in Umfangsrichtung umlaufende Erhöhung verstanden.

Die einzelnen Kämme weisen üblicherweise eine in etwa dreieckige Form mit einer Kammspitze auf, wobei zwischen den Kammspitzen zweier benachbarter Kämme ein Kammtal gebildet ist. Üblicherweise sind die Kammspitzen und die Kammtäler abgeflacht. Die Flankensteigung der einzelnen Kämme kann beispielsweise um ca. 45° betragen. Die maximale Dicke des Grundkörpers, also der Abstand von einer Kammspitze zu der jeweils gegenüberliegenden Kammspitze liegt typischerweise in einem Bereich zwischen 1 bis 4 mm. Neben der üblichen im Wesentlichen dreieckigen Form der einzelnen Kämme können grundsätzlich auch andere Formen vorgesehen sein. So werden in der DE 94 90 171 U1 abgerundete Strukturen vorgeschlagen.

Als Dichtauflagen können beispielsweise Polytetrafluorethylen (PTFE), Graphit, Aluminium oder Silber vorgesehen sein, wobei die Dichtauflagen Hilfs-, Zusatz- und Verstärkungsstoffe enthalten können. Als Dichtauflage können auch Polymermischungen, Metalllegierungen oder Komposit-Werkstoffe vorgesehen sein.

Kammprofildichtringe mit den eingangs beschriebenen Merkmalen werden häufig für Flanschverbindungen eingesetzt, bei denen eine geringe Flanschblattneigung von typischerweise 0,5° oder 1° vorgesehen ist. Entsprechend laufen die Flansche in radialer Richtung gesehen nach außen leicht aufeinander zu. Bei den bekannten Kammprofildichtringen mit einem starren metallischen Grundkörper und sich über die gesamte Breite der Dichtauflage erstreckenden Kämmen wird im äußeren Bereich, insbesondere an dem äußersten Kamm, deshalb eine erhöhte Belastung beobachtet, die zu einer Schädigung des Kammprofildichtrings führen kann. Des Weiteren kann es an der Innenseite des Kammprofildichtrings zu einem Abheben der Flansche von der zugeordneten Dichtfläche kommen, so dass die Dichtwirkung insgesamt reduziert ist.

Aus der DE 41 39 453 C2 ist eine weitere Ausgestaltung eines Kammprofildichtrings bekannt, bei dem seitlich an die Dichtauflage angrenzend Kämme mit einer größeren Höhe vorgesehen sind. Die zuvor beschriebene Gefahr einer Überlastung und Beschädigung des Kammprofildichtrings ist im Rahmen einer solchen Ausgestaltung noch weiter erhöht, da der außen liegende, erhöhte Kamm bei einer Schrägstellung der Flansche praktisch die gesamten auf den Kammprofildichtring einwirkenden Kräfte aufnehmen muss.

Die DE 295 04 402 U1 betrifft eine Dichtungsanordnung für eine Flanschverbindung mit einem metallischen Grundkörper und beidseitig angeordneten Dichtauflagen. Bei dieser Dichtungsanordnung sind an jeder Seite der Dichtung lediglich zwei Kämme vorgesehen, welche die zugeordnete Dichtauflage seitlich begrenzen. Der von der Dichtauflage bedeckte Bereich ist über seine gesamte Breite eben ausgebildet. Durch eine unterschiedliche Höhe der Kammspitzen der jeweils an einer Seite angeordneten Kämme kann eine gewisse Schrägstellung des Flansches ausgeglichen werden. Es ergibt sich jedoch der Nachteil, dass der Grad der Schrägstellung im Vorhinein genau bekannt sein muss. Da im Bereich der Dichtauflage keine Kämme vorgesehen sind und entsprechend die beiden randseitigen Kämme nicht abgedeckt sind, ist die in der DE 295 04 402 U1 beschriebene Dichtung bezüglich ihrer Dichtwirkung nicht mit einer herkömmlichen Kammprofildichtung vergleichbar.

Kammprofildichtringe mit den Merkmalen des Oberbegriffs des Patentanspruchs 1 sind aus der DE 298 12 927 U1 sowie der US 2004/0118510 A1 bekannt. Der außen liegende Abschnitt mit einer geringeren Höhe erstreckt sich nur über einen kleinen Teil der gesamten Breite, wobei dort kein wesentlicher Beitrag zur Kraftabstützung geleistet wird. Gemäß der DE 298 12 927 U1 ist an dem äußeren Abschnitt eine Klammer vorgesehen, die nicht mit den angrenzenden Flanschen in Kontakt kommen soll.

Aus der DE 93 04 123 U1 ist ein herkömmlicher Kammprofildichtring bekannt, wobei an einem außen liegenden Zentrierring als Korrosionsschutz separate Dichtring unter leichter Vorspannung vorgesehen sind.

Aus der DE 27 56 351 B1 ist eine Dichtung mit einem metallischen Grundkörper bekannt, der eine ballige Form aufweist. Durch die ballige Form kann stets nur ein Bruchteil der gesamten zur Verfügung stehenden Dichtungsfläche zur Abdichtung genutzt werden.

Vor diesem Hintergrund liegt der vorliegenden Erfindung die Aufgabe zugrunde, einen Kammprofildichtring anzugeben, der eine erhöhte Belastbarkeit aufweist und eine gute Dichtwirkung gewährleistet.

Gegenstand der Erfindung und Lösung der Aufgabe ist ein Kammprofildichtring gemäß Patentanspruch 1.

Bei einer ebenen Ausgestaltung des außen liegenden Abschnitt ist mit anderen Worten von außen her gesehen der erste Kamm in den von der Dichtauflage abgedeckten Bereich hinein versetzt angeordnet. An dem außen liegenden, ebenen Abschnitt kann sich die vergleichsweise weiche Dichtauflage, die beispielsweise aus PTFE, Graphit, Aluminium oder Silber bestehen kann, weitgehend frei verformen, so dass dort übermäßige Beanspruchungen vermieden werden. Dennoch trägt dieser Bereich erheblich zur gesamten Kraftaufnahme bei, so dass dann an der Kammspitze des ersten, in die Dichtauflage hinein versetzten Kammes eine reduzierte Krafteinwirkung auftritt. Durch die Verlagerung des ersten Kammes in einen mittleren Bereich der Dichtauflage hinein wird auch an der Innenseite des Kammprofildichtrings ein Abheben oder zumindest ein übermäßiges Abheben der Flansche von der Weichstoffauflage vermieden.

Anstelle einer vollständig ebenen Ausgestaltung des außen liegenden, von der Dichtauflage abgedeckten Abschnitts kann dieser auch mit Kämmen reduzierter Höhe versehen sein. Die Höhe des außen liegenden Bereichs, d. h. die Höhe der dort vorgesehenen Kämme ist so zu wählen, dass bei üblichen Flanschblattneigungen von bis zu einigen Grad im montierten Zustand eine direkte Anlage der Kämme reduzierter Höhe mit den Flanschen vermieden wird.

Wie auch bei den aus dem Stand der Technik bekannten Ausführungen, ist üblicherweise auf beiden Seiten des Grundkörpers eine Dichtauflage vorgesehen. Die vorliegende Erfindung ist jedoch nicht auf diese an sich übliche Ausgestaltung begrenzt, so dass die als erfindungswesentlich hervorgehobenen Eigenschaften in einem gewissen Maße auch bei einem Kammprofildichtring erreicht werden können, der lediglich an einer Seite eine Dichtauflage sowie das zuvor beschriebene Kammprofil aufweist.

Um eine leichte Schrägstellung aufgrund der vorgegebenen Flanschblattneigung und/oder aufgrund einer Verformung der Flansche bei einer Kraftbeaufschlagung ausgleichen zu können, ist der Grundkörper in dem von der Dichtauflage abgedeckten Bereich bezüglich der Mitte der Dichtauflage asymmetrisch ausgebildet. Während wie zuvor beschrieben unterhalb der Dichtauflage von außen gesehen erfindungsgemäß zunächst ein vorzugsweise ebener Abschnitt mit reduzierter Höhe vorgesehen ist, kann der innerste Kamm unmittelbar an den inneren Rand des metallischen Grundkörpers anschließen.

Erfindungsgemäß erstreckt sich der außen liegende, vorzugsweise ebene Abschnitt von dem äußeren Rand der Dichtauflage über zumindest 30 % der Breite der Dichtauflage. Bevorzugt ist vorgesehen, dass die Breite des ebenen Abschnitts zwischen 30 % und 50 % der Breite der Dichtauflage beträgt. Dabei ist zu berücksichtigen, dass die Entlastung des metallischen Grundkörpers verbessert wird, wenn die Kammspitze des von außen gesehenen ersten Kamms bzw. ersten Kamms voller Höhe, die im Rahmen der vorliegenden Erfindung auch als Drehpunkt bezeichnet werden kann, weiter nach innen versetzt angeordnet ist. Dagegen ist zu berücksichtigen, dass die an dem außen liegenden Abschnitt nach innen anschließenden Kämme maßgeblich zur Erzielung der gewünschten Dichtwirkung beitragen. Insbesondere muss ein übermäßiges Fließen der Dichtauflage vermieden werden, so dass sich der außen liegende vorzugsweise ebene Abschnitt ausgehend von dem äußeren Rand der Dichtauflage zweckmäßig über maximal 60 % der Breite der Dichtauflage erstreckt, während nach innen daran anschließend Kämme in an sich üblicher Ausformung vorgesehen sind.

Um die für einen Kammprofildichtring übliche Dichtwirkung zu erreichen, sind gemäß einer bevorzugten Ausgestaltung der Erfindung sämtliche Kämme von der zugeordneten Dichtauflage abgedeckt. Sofern keine übermäßige Beanspruchung der Dichtung vorliegt, kann dadurch ein direkter metallischer Kontakt zwischen dem Grundkörper des Kammprofildichtrings einerseits und der Dichtflächen der Flansche andererseits vermieden werden. Insbesondere soll verhindert werden, dass bei einer versehentlichen, übermäßigen Krafteinwirkung die Dichtfläche eines angrenzenden Flansches verformt und damit beschädigt wird.

Gemäß den aus dem Stand der Technik bekannten Kammprofildichtungen mit durchgehenden, unmittelbar einander anschließenden Kämmen wird die Dichtauflage üblicherweise mit Klebstoff befestigt. Der Klebstoffauftrag ist jedoch insoweit schwierig, dass bei einer lediglich punktuellen Verklebung an den Kammspitzen die Dichtauflagen bei der Handhabung abfallen können. Wenn dagegen bei einem erhöhten Klebstoffauftrag auch die Kammtäler zu einem großen Anteil mit Klebstoff gefüllt sind, kann eine ordnungsgemäße Funktion nicht mehr sichergestellt werden. Gemäß einer bevorzugten Ausgestaltung der Erfindung erfolgt deshalb eine Verklebung mit einer genau dosierbaren Klebermenge, wobei die Dichtauflage leicht vorgepresst und die Kammtäler hereingedrückt wird. Zumindest an dem außen liegenden Abschnitt des von der Dichtauflage abgedeckten Bereichs des metallischen Grundkörpers kann eine sichere, flächige Verklebung erreicht werden. Besonders bevorzugt sind der metallische Grundkörper und die Dichtauflage vollflächig oder zumindest weitgehend vollflächig miteinander verklebt.

Die metallischen Grundkörper, die beispielsweise als Drehteile ausgebildet sein können, können in an sich bekannter Weise außen liegende Zentriermittel aufweisen. Zusätzlich können auch nachträglich angebrachte Zentrierringe, Vorsprünge, Nasen oder dergleichen vorgesehen sein.

Um die Dichtwirkung weiter zu verbessern, besteht die Möglichkeit bei den einzelnen Kämmen, die Kammform sowie den Abstand zu dem jeweils benachbarten Kamm zu variieren. Schließlich kann auch zwischen zwei benachbarten Kämmen ein ebenes Plateau vorgesehen sein, welches eine größere Höhe aufweist, als die nach den jeweils angrenzenden Kammspitzen anschließenden Kammtäler. Der Höhenunterschied zwischen den Kammspitzen und Kammtäler beträgt abhängig von der jeweils vorgesehenen maximalen Dicke des Grundkörpers zwischen 0,2 mm und 1 mm. Die bei einer Ausgestaltung mit zwei Dichtauflagen und zugeordneten Kammprofilen an beiden Seiten zwischen zwei gegenüberliegenden Kammtälern bestimmte Dicke kann dabei in etwa der Dicke des außen liegenden vorzugsweise ebenen Abschnitts entsprechen.

Abgesehen von optimal vorgesehenen Zentriermitteln kann vorgesehen sein, dass sich die zumindest eine Dichtauflage über die gesamte Breite des Grundkörpers erstreckt. Wenn an beiden Seiten des Grundkörpers jeweils eine Dichtauflage vorgesehen ist, können diese auch aus einem Teil, welches den Grundkörper innen und/oder außen umgreift, gebildet sein.

Wenn im Rahmen einer bevorzugten Ausgestaltung der außen liegende Abschnitt eben ausgebildet ist, ist dort auch die Anbringung einer Markierung, Beschriftung oder anderweitigen Kennzeichnung an dem Grundkörper und/oder der Dichtauflage besonders leicht möglich. Als Kennzeichnung können beispielsweise eine Seriennummer, eine Typenbezeichnung, eine Charge, ein Herstellungsdatum, ein Hersteller oder aber auch ein codierter Strichcode vorgesehen sein. Die Kennzeichnung kann an der Oberseite der Dichtauflage sichtbar erfolgen. Da gemäß der bevorzugten Ausgestaltung in dem außen liegenden ebenen Abschnitt keine Kämme vorgesehen sind, wird die Dichtauflage dort vergleichsweise gleichmäßig verformt, so dass die Kennzeichnung zum Teil auch nach der Benutzung des Kammprofildichtrings lesbar ist. Alternativ oder zusätzlich kann die Kennzeichnung auch innen liegend an der Unterseite der Dichtauflage oder an dem Grundkörper angebracht werden. Dies ermöglicht nach der Entfernung der Dichtauflage nachträglich, beispielsweise im Falle einer Reklamation und bei einer entsprechenden Kennzeichnung, die Originalität, das Alter oder sonstige Eigenschaften der Dichtung zu überprüfen.

Die Erfindung wird im Folgenden anhand einer lediglich ein Ausführungsbeispiel darstellenden Zeichnung erläutert. Es zeigen schematisch:
- **Fig. 1**: einen erfindungsgemäßen Kammprofildichtring im Schnitt,
- **Fig.2**: den Kammprofildichtring gemäß Fig. 1 im eingebauten Zustand im Schnitt,
- **Fig. 3**: den Kammprofildichtring gemäß Fig. 1 in einer perspektivischen Ansicht, wobei der Kammprofildichtring geschnitten mit einer zum Teil aufgebrochenen oberen Dichtauflage dargestellt ist.

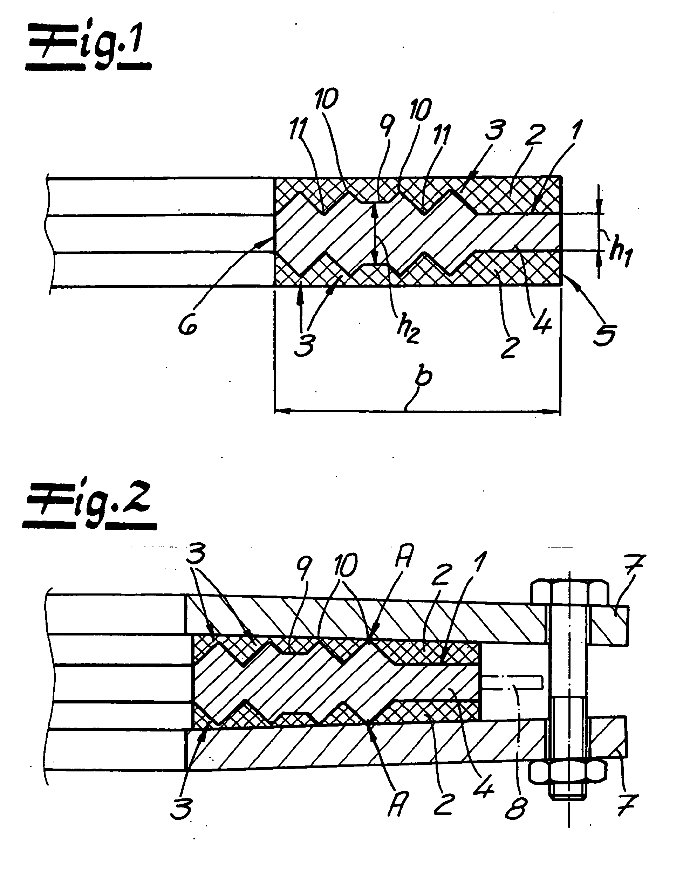

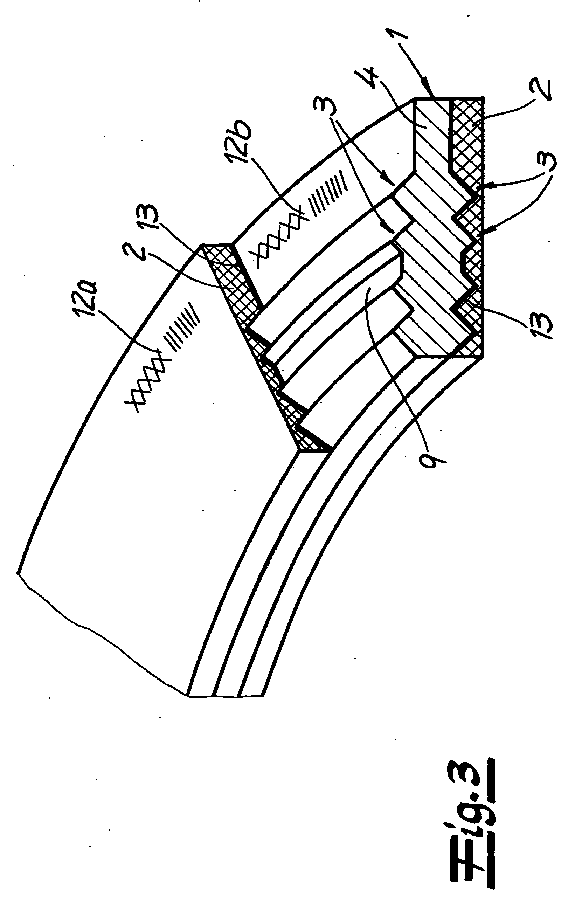

Fig. 1 zeigt einen erfindungsgemäßen Kammprofildichtring mit einem metallischen Grundkörper 1 und beidseitig auf dem Grundkörper 1 angeordneten Dichtauflagen 2. Insbesondere der Fig. 3 ist zu entnehmen, dass der Grundkörper 1 in dem von den Dichtauflagen 2 abgedeckten Bereich ein Profil mit in Umfangsrichtung umlaufenden Kämmen 3 aufweist, wobei sämtliche Kämme 3 von der jeweils zugeordneten Dichtauflage 2 vollständig bedeckt sind. In dem von den Dichtauflagen 2 abgedeckten Bereich des Grundkörpers 1 schließt an die Kämme 3 ein in radialer Richtung außen liegender ebener Abschnitt 4 an, der sich ausgehend von dem äußeren Rand 5 der beiden Dichtauflagen 2 über zumindest 10 % der Breite b, in dem dargestellten Ausführungsbeispiel über etwa 40 % der Breite b der Dichtauflagen 2 erstreckt und der eine geringere Höhe h₁ aufweist als die in radialer Richtung innen anschließenden Kämme 3.

Entsprechend ergibt sich bezüglich der Mitte der Dichtauflagen 2 ein asymmetrisches Profil des metallischen Grundkörpers 1, wobei der innerste Kamm 3 unmittelbar an den inneren Rand 6 des metallischen Grundkörpers 1 anschließt.

Fig. 2 zeigt den Kammprofildichtring im montierten Zustand zwischen zwei Flanschen. Die Flansche 7 weisen eine in der Zeichnung zur Verdeutlichung überhöht dargestellte Flanschblattneigung auf, das heißt die Flansche 7 laufen in radialer Richtung nach außen gesehen aufeinander in einem spitzen Winkel zu. Die Flanschblattneigung, die auch als Flanschrotation bezeichnet wird, beträgt in der Praxis beispielsweise 0,5° oder 1°. Die Kammspitze 10 des von außen gesehenen ersten Kamms 3 ist aufgrund des erfindungsgemäß vorgesehenen ebenen Abschnitts 4 radial nach innen in die Dichtauflagen 2 hinein versetzt angeordnet und bildet in Bezug auf die Krafteinleitung der Flansche 7 einen Drehpunkt A. Da der äußere Bereich der Dichtauflagen 2, die beispielsweise aus PTFE, Graphit, Aluminium oder Silber bestehen können, sich weitgehend frei verformen kann, aber dennoch wesentlich zur Kraftaufnahme beitragen, ist die Belastung an dem Drehpunkt A im Vergleich zu den aus dem Stand der Technik bekannten Ausführungen deutlich reduziert. Es ergibt sich auch der besondere Vorteil, dass in einem gewissen Maße eine Anpassung an unterschiedlich schräg gestellte Flansche 7 möglich ist.

Der metallische Grundkörper 1, der als Drehteil ausgebildet ist, ist wie in Fig. 3 angedeutet, durch Klebstoff 13 vollflächig mit den beiden Dichtauflagen 2 verklebt, wobei während des Fertigungsprozesses ein Vorpressen der Dichtauflagen 2 vorgesehen sein kann, um die Dichtauflagen 2 entsprechend der Kontur des Grundkörpers 1 zu verformen.

Wie in der Fig. 2 strichpunktiert dargestellt, kann der Kammprofildichtring außen liegende Zentriermittel 8, beispielsweise in Form eines Zentrierrings aufweisen.

Zwischen zwei der Kämme 3 ist ein ebenes Plateau 9 vorgesehen, welches eine größere Höhe h₂ als die nach den jeweils angrenzenden Kammspitzen 10 anschließenden Kammtäler 11 aufweist.

Wie der Fig. 3 zu entnehmen ist, ist an dem ebenen Abschnitt 4 sowohl an der oberen Dichtauflage 2 als auch an dem Grundkörper 1 eine Kennzeichnung 12a, 12b vorgesehen. Bei der für einen Benutzer sichtbaren Kennzeichnung 12a auf der oberen Dichtauflage 2, kann es sich beispielsweise um eine Typenbezeichnung, Seriennummer oder eine Angabe des Herstellers handeln. Die auf dem Grundkörper 1 vorgesehene Kennzeichnung 12b ist dagegen für einen Benutzer nicht sichtbar. Diese Kennzeichnung kann beispielsweise dafür genutzt werden, um im Falle einer Reklamation und nach einer Entfernung der oberen Dichtauflage 2 die Originalität, das Alter oder sonstige Eigenschaften der Dichtung zu überprüfen. Von besonderem Vorhalt ist in diesem Zusammenhang, dass die auf dem Grundkörper 1 angebrachte Kennzeichnung 12b während der Benutzung des Kammprofildichtrings durch die obere Dichtstoffauflage 2 geschützt ist, so dass die Kennzeichnung 12b auch nach einer langen Benutzungsdauer sichtbar bleibt. Insbesondere kann als Kennzeichnung 12a, 12b auch ein mit einem entsprechenden Lesegerät auswertbarer Strichcode vorgesehen sein.

## Patentansprüche

1. Kammprofildichtring mit einem metallischen Grundkörper (1) und einer auf dem Grundkörper (1) angeordneten zusammenhängenden Dichtauflage (2), wobei der Grundkörper (1) in dem von der Dichtauflage (2) abgedeckten Bereich ein Profil mit in Umfangsrichtung umlaufenden Kämmen (3) aufweist, wobei zumindest ein Teil der Kämme (3) vollständig von der Dichtauflage (2) abgedeckt ist, wobei der Grundkörper (1) in dem von der Dichtauflage (2) abgedeckten Bereich einen bezüglich der Mitte der Dichtauflage (2) asymmetrisches Profil aufweist und wobei der Grundkörper (1) in dem von der Dichtauflage (2) abgedeckten Bereich einen in radialer Richtung außen liegenden Abschnitt (4) aufweist, der eine geringere Höhe (h₁) aufweist, als die in radialer Richtung innen anschließenden Kämme (3), **dadurch gekennzeichnet, dass** an den Kämmen der Höhenunterschied zwischen den Kammspitzen (10) und den Kammtälern (11) zwischen 0,2 mm und 1 mm beträgt und dass sich der außen liegende, vorzugsweise ebene Abschnitt (4) ausgehend von dem äußeren Rand (5) der Dichtauflage (2) über zumindest 30 % der Breite (b) der Dichtauflage (2) erstreckt, wobei an dem außen liegenden Abschnitt (4) die Dichtauflage (2) dazu vorgesehen ist erheblich zur gesamten Kraftaufnahme der Kammprofildichtung beizutragen.

2. Kammprofildichtring nach Anspruch 1, **dadurch gekennzeichnet, dass** der in radialer Richtung außen liegende Bereich eben ist.

3. Kammprofildichtring nach Anspruch 1 oder 2, **dadurch gekennzeichnet, dass** der innerste Kamm (3) unmittelbar an den inneren Rand (6) des metallischen Grundkörpers (1) anschließt.

4. Kammprofildichtring nach einem der Ansprüche 1 bis 3, **dadurch gekennzeichnet, dass** sich der außen liegende, vorzugsweise ebene Abschnitt (4) ausgehend von dem äußeren Rand (5) der Dichtauflage (2) über maximal 60 % der Breite (b) der Dichtauflage (2) erstreckt.

5. Kammprofildichtring nach einem der Ansprüche 1 bis 4, **dadurch gekennzeichnet, dass** sämtliche Kämme (3) von der Dichtauflage (2) abgedeckt sind.

6. Kammprofildichtring nach einem der Ansprüche 1 bis 5, **dadurch gekennzeichnet, dass** die Dichtauflage (2) mit dem Grundkörper (1) vollflächig verklebt ist.

7. Kammprofildichtring nach einem der Ansprüche 1 bis 6 , **dadurch gekennzeichnet, dass** der Grundkörper (1) als Drehteil ausgebildet ist.

8. Kammprofildichtring nach einem der Ansprüche 1 bis 7, **gekennzeichnet durch** außen liegende Zentriermittel (8).

9. Kammprofildichtring nach einem der Ansprüche 1 bis 8, **dadurch gekennzeichnet, dass** zwischen zwei benachbarten Kämmen (3) ein ebenes Plateau (9) vorgesehen ist, welches eine größere Höhe (h₂) aufweist als die nach den jeweils angrenzenden Kammspitzen (10) anschließenden Kammtäler (11).

10. Kammprofildichtring nach einem der Ansprüche 1 bis 9, **dadurch gekennzeichnet, dass** an dem außen liegenden ebenen Abschnitt (4) eine Markierung, Beschriftung oder anderweitige Kennzeichnung (12a, 12b) an dem Grundkörper (1) und/oder der Dichtauflage (2) angebracht ist.

11. Kammprofildichtring nach einem der Ansprüche 1 bis 10, **dadurch gekennzeichnet, dass** auf beiden Seiten des Grundkörpers (1) eine Dichtauflage (2) angeordnet ist.

12. Kammprofildichtring nach einem der Ansprüche 1 bis 11, **dadurch gekennzeichnet, dass** die Dichtauflage (2) aus Polytetrafluorethylen (PTFE), Graphit, Aluminium oder Silber gebildet ist.

## Claims

1. A grooved sealing ring comprising a metallic base body (1) and a continuous sealing layer (2) arranged on said base body (1), wherein the base body (1), in the region covered by the sealing layer (2), has a profile with grooves (3) extending circumferentially in the circumferential direction, wherein at least a portion of the grooves (3) is completely covered by the sealing layer (2), wherein the base body (1), in the region covered by the sealing layer (2), has a profile that is asymmetrical with respect to the center of the sealing layer (2), and wherein the base body (1), in the region covered by the sealing layer (2), has a section (4) which is located on the outer side in the radial direction and which has a smaller height (h₁) than the grooves (3) adjoining in the radial direction toward the inner side, **characterized in that** the height difference at the grooves between the top (10) of the grooves and the bottom (11) of the grooves is between 0.2 mm and 1 mm and that the outer, preferably flat, section (4) extends starting from the outer edge (5) of the sealing layer (2) over at least 30% of the width (b) of the sealing layer (2), wherein at the outer section (4), the sealing layer (2) is provided for the purpose of significantly contributing to the force absorption of the grooved seal.

2. The grooved sealing ring according to claim 1, **characterized in that** the region located in the radial direction on the outer side is flat.

3. The grooved sealing ring according to claim 1 or claim 2, **characterized in that** the innermost groove (3) is directly adjacent to the inner edge (6) of the metallic base body (1).

4. The grooved sealing ring according to any one of the claims 1 to 3, **characterized in that** the outer, preferably flat, section (4) extends starting from the outer edge (5) of the sealing layer (2) over a maximum of 60% of the width (b) of the sealing layer (2).

5. The grooved sealing ring according to any one of the claims 1 to 4, **characterized in that** all grooves (3) are covered by the sealing layer (2).

6. The grooved sealing ring according to any one of the claims 1 to 5, **characterized in that** the sealing layer (2) is adhered over the entire surface to the base body (1).

7. The grooved sealing ring according to any one of the claims 1 to 6, **characterized in that** the base body (1) is formed as a turned part.

8. The grooved sealing ring according to any one of the claims 1 to 7, **characterized by** centering means (8) located on the outside.

9. The grooved sealing ring according to any one of the claims 1 to 8, **characterized in that** between two adjacent grooves (3), a flat plateau (9) is provided which has a greater height (h₂) than the groove bottoms (11) that follow in each case the adjacent groove tops (10).

10. The grooved sealing ring according to any one of the claims 1 to 9, **characterized in that** on the outer flat section (4), a mark, lettering or other identification (12a, 12b) is placed on the base body (1) and/or the sealing layer (2).

11. The grooved sealing ring according to any one of the claims 1 to 10, **characterized in that** on both sides of the base body (1), a sealing layer (2) is arranged.

12. The grooved sealing ring according to any one of the claims 1 to 11, **characterized in that** the sealing layer (2) is formed from polytetrafluoroethylene (PTFE), graphite, aluminum or silver.

## Revendications

1. Joint d'étanchéité à profilé en peigne (« Kammprofil ») comportant un corps de base métallique (1) et un revêtement d'étanchéité (2) d'un seul tenant disposé sur le corps de base (1), dans lequel le corps de base (1) présente dans la zone recouverte par le revêtement d'étanchéité (2) un profilé avec des peignes (3) en faisant le tour dans la direction circonférentielle, dans lequel au moins une partie des peignes (3) est complètement recouverte par le revêtement d'étanchéité (2), dans lequel le corps de base (1) présente dans la zone recouverte par le revêtement d'étanchéité (2) un profilé asymétrique par rapport au milieu du revêtement d'étanchéité (2) et dans lequel le corps de base (1) présente dans la zone recouverte par le revêtement d'étanchéité (2) une portion (4) située à l'extérieur dans la direction radiale, qui présente une hauteur plus petite (h₁) que les peignes (3) s'y rattachant à l'intérieur dans la direction radiale, **caractérisé en ce que** sur les peignes la différence de hauteur entre les pointes de peigne (10) et les creux de peigne (11) est comprise entre 0,2 mm et 1 mm et **en ce que** la portion (4) située à l'extérieur, de préférence plate s'étend à partir du bord extérieur (5) du revêtement d'étanchéité (2) sur au moins 30% de la largeur (b) du revêtement d'étanchéité, dans lequel sur la portion située à l'extérieur (4) le revêtement d'étanchéité (2) est prévu afin de contribuer considérablement à l'absorption de force totale du joint d'étanchéité à profilé en peigne.

2. Joint d'étanchéité à profilé en peigne selon la revendication 1, **caractérisé en ce que** la zone située à l'extérieur dans la direction radiale est plate.

3. Joint d'étanchéité à profilé en peigne selon les revendications 1 ou 2, **caractérisé en ce que** le peigne le plus à l'intérieur (3) se rattache directement au bord intérieur (6) du corps de base métallique (1).

4. Joint d'étanchéité à profilé en peigne selon une des revendications 1 à 3, **caractérisé en ce que** la portion (4) située à l'extérieur, de préférence plate s'étend en partant du bord extérieur (5) du revêtement d'étanchéité (2) sur au maximum 60% de la largeur (b) du revêtement d'étanchéité (2).

5. Joint d'étanchéité à profilé en peigne selon une des revendications 1 à 4, **caractérisé en ce que** la totalité des peignes (3) sont recouverts par le revêtement d'étanchéité (2).

6. Joint d'étanchéité à profilé en peigne selon une des revendications 1 à 5, **caractérisé en ce que** le revêtement d'étanchéité (2) est collé sur toute sa surface avec le corps de base (1).

7. Joint d'étanchéité à profilé en peigne selon une des revendications 1 à 6, **caractérisé en ce que** le corps de base (1) est réalisé comme une pièce rotative.

8. Joint d'étanchéité à profilé en peigne selon une des revendications 1 à 7, **caractérisé par** des moyens de centrage (8) situés à l'extérieur.

9. Joint d'étanchéité à profilé en peigne selon une des revendications 1 à 8, **caractérisé en ce que** entre deux chambres voisines (3) un plateau plat (9) est prévu, lequel présente une plus grande hauteur (h₂) que les creux de peigne (11) s'y rattachant après les pointes de peigne (10) respectivement contiguës.

10. Joint d'étanchéité à profilé en peigne selon une des revendications 1 à 9, **caractérisé en ce que** sur la portion plate (4) située à l'extérieur, un marquage, un étiquetage ou un autre type d'identification (12a, 12b) est appliqué sur le corps de base (1) et/ou sur le revêtement d'étanchéité (2).

11. Joint d'étanchéité à profilé en peigne selon une des revendications 1 à 10, **caractérisé en ce qu'**un revêtement d'étanchéité (2) est disposé sur les deux côtés du corps de base (1).

12. Joint d'étanchéité à profilé en peigne selon une des revendications 1 à 11, **caractérisé en ce que** le revêtement d'étanchéité (2) est formé de polytétrafluoroéthylène (PTFE), de graphite, d'aluminium ou d'argent.
